# EUROPÄISCHE PATENTSCHRIFT

(11) **EP 4 350 155 B1**
(45) Veröffentlichungstag und Bekanntmachung des Hinweises auf die Patenterteilung: **17.09.2025**
(21) Anmeldenummer: 23199143.1
(22) Anmeldetag: 22.09.2023
(51) Int. Cl.: F16B 2/24, B60R 13/02, F16B 5/06

(54) **BEFESTIGUNGSKLAMMER, BEFESTIGUNGSSYSTEM UND DACHANORDNUNG**
FASTENING CLIP, FASTENING SYSTEM AND ROOF ASSEMBLY
PINCE DE FIXATION, SYSTÈME DE FIXATION ET ENSEMBLE TOIT

(30) Priorität: 07.10.2022 DE 102022126005
(43) Veröffentlichungstag der Anmeldung: 10.04.2024
(73) Patentinhaber: Volkswagen Aktiengesellschaft, 38440 Wolfsburg (DE)
(72) Erfinder: GROBE, Michaela, 38557 Osloß (DE); WAHLANDT, Felix, 10557 Berlin (DE); de JONG, Michael, 79588 Efringen-Kirchen (DE)
(74) Vertreter: Clarenbach, Carl-Philipp

(56) Entgegenhaltungen:
- WO-A1-2010/107550
- WO-A1-99/21729
- DE-U1- 202015 106 289
- KR-U- 19980 043 985
- US-A- 5 803 532
- US-A1- 2006 117 535

## Beschreibung

Die Erfindung betrifft eine Befestigungsklammer zur Befestigung eines Formhimmels an einem Fahrzeugdach, insbesondere Panorama- oder Schiebedach, mit einem Fußelement, das plattenförmig ausgebildet ist, mit zwei sich einander gegenüberliegend angeordneten und von dem Fußelement weg und zumindest im Wesentlichen aufeinander zu erstreckenden Stützelementen, wobei an jedem Stützelement ein von dem Stützelement vorstehendes Rastelement zur Verrastung der Befestigungsklammer an dem Formhimmel oder an dem Fahrzeugdach angeordnet ist, das an einem von dem Fußelement abgewandten Ende des jeweiligen Stützelements elastisch verlagerbar gehalten ist und sich in Richtung des Fußelements erstreckt.

Weiterhin betrifft die Erfindung ein Befestigungssystem zum Befestigen eines Formhimmels an einem Fahrzeugdach, insbesondere Panorama- oder Schiebedach, mit einem an dem Formhimmel oder dem Fahrzeugdach befestigbaren Lagerelement, das eine Aufnahme zur formschlüssigen Arretierung einer Befestigungsklammer aufweist, und mit einer Befestigungsklammer, die formschlüssig an dem Lagerelement gehalten oder haltbar ist, wobei die Befestigungsklammer wie vorstehend beschrieben ausgebildet ist.

Außerdem betrifft die Erfindung eine Dachanordnung für ein Fahrzeug, insbesondere Kraftfahrzeug, mit einem Fahrzeugdach, insbesondere Panoramadach oder Schiebedach, das einen Dachrahmen, in welchem eine Dachöffnung ausgebildet ist, und ein Glasdachelement aufweist, das sich über die Dachöffnung erstreckt, und mit einem Formhimmel, der an einer einem Fahrzeuginnenraum zugeordneten Unterseite des Fahrzeugdachs durch das obenstehend beschriebene Befestigungssystem befestigt ist.

Befestigungsklammern und -systeme der eingangs genannten Art sind aus dem Stand der Technik bereits bekannt. So offenbart beispielsweise die Patentanmeldung DE 10 2008 052 965 A1 eine Befestigungsklammer, die mit einer weiteren Befestigungsklammer zur Verbindung eines Formhimmels an einem Panoramadach zusammenwirkt. Dabei weist die Befestigungsklammer nach innen vorstehende, also zwischen den Stützelementen liegende Rastelemente auf, zwischen welchen ein Gegenrastelement des Fahrzeugdachs oder des Formhimmels einführbar ist, um von den Rastelementen hintergriffen zu werden.

Eine gattungsgemäße Befestigungsklammer ist beispielsweise aus der Offenlegungsschrift DE 20 2015 106289 U1 bekannt. Weitere Befestigungsklammern sind aus den Druckschriften US 5 803 532 A und WO 99/21729 A1 bekannt.

Der Erfindung liegt die Aufgabe zugrunde, eine verbesserte Befestigungsklammer zu schaffen, die einen verbesserten Spielausgleich ermöglicht und dennoch kostengünstig realisierbar ist.

Die der Erfindung zugrundeliegende Aufgabe wird durch eine Befestigungsklammer mit den Merkmalen des Anspruchs 1 gelöst. Die erfindungsgemäße Befestigungsklammer hat den Vorteil, dass durch eine vorteilhafte Ausbildung der Befestigungsklammer diese zum einen direkt an dem Formhimmel oder dem Fahrzeugdach befestigbar ist, insbesondere ohne Zwischenschaltung eines Gegenrastelements, und dass ein vorteilhafter Spielausgleich auf einfache Art und Weise gewährleistet wird. Erfindungsgemäß ist hierzu vorgesehen, dass das jeweilige Rastelement beabstandet zu dem Fußelement eine Rastnase zum Hintergreifen eines Randabschnitts des Formhimmels oder des Fahrzeugdachs aufweist, und dass die jeweilige Rastnase von der von dem gegenüberliegenden Stützelement abgewandten Außenseite des Stützelements vorsteht. Durch die erfindungsgemäße Befestigungsklammer wird somit die Befestigungsstelle der Befestigungsklammer an dem Formhimmel oder dem Fahrzeugdach nach außen verlagert, also in einen Bereich außerhalb des durch Fußelement und Stützelemente eingeschlossenen Bereichs der Befestigungsklammer. Dadurch kann die Befestigungsklammer insbesondere direkt in eine Öffnung des Formhimmels oder des Fahrzeugdachs eingeschoben und darin verrastet werden. Dadurch, dass die Rastnase außerhalb der Stützelemente liegt, ist eine Längsverschiebung der Aufnahme entlang des Fahrzeugdachs oder des Formhimmels mit einfachen Mitteln realisiert. Darüber hinaus gewährleistet die Rastnase nicht nur, dass die Befestigungsklammer an dem Formhimmel verrastet ist, sondern dass auch ein Höhenausgleich durch die elastische Verlagerung zumindest der Rastelemente erfolgen kann. Unter der Höhe der Befestigungsklammer wird dabei die Erstreckung der Befestigungsklammer senkrecht zu dem Fußelement, beispielsweise entlang einer Spiegelebene zwischen den einander gegenüberliegenden Stützelementen verstanden. Vorzugsweise weisen die Stützelemente jeweils zwei beabstandet zueinander angeordnete Stützschenkel auf, die durch einen Quersteg auf dem von dem Fußelement abgewandten Ende miteinander insbesondere einstückig verbunden sind. Besonders bevorzugt ist das jeweilige Rastelement an dem Quersteg zwischen den benachbarten Stützschenkeln des jeweiligen Stützelements gehalten und insbesondere einstückig mit diesem ausgebildet. Die elastische Verlagerbarkeit des Rastelements wird dabei bevorzugt durch eine elastische Verformung des Rastelements, insbesondere im Übergang zu dem Stützelement gewährleistet.

Gemäß einer bevorzugten Weiterbildung der Erfindung weist das Fußelement zwei parallel zueinander angeordnete Führungsschienen auf, die sich jeweils von einem Stützelement zu dem gegenüberliegenden Stützelement erstrecken und von den Stützelementen seitlich zur Aufnahme in einer Schienenführung beispielsweise als Seitenränder vorstehen. Durch die vorteilhafte Weiterbildung der Befestigungsklammer wird erreicht, dass das Fußelement selbst verschiebbar an einem Gegenelement, wie beispielsweise dem Formhimmel oder dem Fahrzeugdach oder in einem dazwischenliegenden Lagerelement verschiebbar gelagert ist. Dadurch wird ein Toleranzausgleich zwischen Formhimmel und Fahrzeugdach in eine weitere Richtung in vorteilhafter Art und Weise gewährleistet. Insbesondere erstrecken sich die Führungsschienen quer zur Längserstreckung der Rastaufnahmen, sodass die Befestigungsklammer im Bereich der Rastaufnahme in eine erste Richtung verschiebbar ist, im Bereich des Fußelements in eine zweite, quer zur ersten Richtung liegende Richtung.

Gemäß einer bevorzugten Weiterbildung der Erfindung sind die Stützelemente, zumindest ein Stützschenkel des jeweiligen Stützelement, und die Rastelemente jeweils streifenförmig ausgebildet. Somit weisen die Stützelemente und die Rastelemente einen rechteckförmigen Querschnitt mit einer im Vergleich zu seiner Breite kleinen Tiefe auf. Dadurch sind die Stützelemente und die Rastelementen in vorteilhafter Weise selbst elastisch verformbar ausgebildet, sodass die Befestigungsklammer insgesamt vorteilhaft montierbar ist, insbesondere ohne die Befestigungsklammer selbst oder den Formhimmel oder das Fahrzeugdach bei der Montage zu beschädigen. Insbesondere sind die Stützelemente und Rastelemente dabei derart ausgerichtet, dass sie in Breitenerstreckung parallel zueinander ausgerichtet sind, sodass sie in derselben Biegeebene liegen, beziehungsweise in derselben Ebene verformbar sind.

Gemäß einer nicht erfindungsgemäßen Ausführungsform weist das jeweilige Rastelement ein freies Ende beabstandet zu dem Fußelement auf. Damit ist das jeweilige Rastelement einendig an dem zugeordneten Stützelement gehalten und anderendig frei schwingend ausgebildet, wobei das freischwingende Ende dem Fußelement zugeordnet ist, jedoch beabstandet zu diesem liegt. Dadurch ist ein vorteilhaft großer Verlagerungsweg des jeweiligen Rastelements gewährleistet. Darüber hinaus wird durch die lediglich einendig gehaltene elastische Lagerung gewährleistet, dass das Rastelement mit geringem Kraftaufwand verlagerbar ist, sodass die Montage der Befestigungsklammer ebenfalls ohne hohen Kraftaufwand erfolgen kann.

Weiterhin ist bevorzugt vorgesehen, dass das jeweilige freie Ende ein Halteelement aufweist, das sich zumindest im unbelasteten Zustand der Befestigungsklammer parallel zu dem Fußabschnitt erstreckt. Durch das Halteelement beziehungsweise durch den Endabschnitt wird eine vorteilhafte Ausrichtung der Befestigungsklammer an dem Formhimmel oder dem Fahrzeugdach mit Bezug auf das Fußelement erreicht, die insbesondere eine sichere und robuste Auflage des Formhimmels oder des Fahrzeugdachs auf dem Endabschnitt erzielt.

Weiterhin ist bevorzugt vorgesehen, dass die Stützelemente einstückig mit dem Fußelement ausgebildet sind. Dadurch ist zum einen eine robuste Verbindung zwischen Stützelement und Fußelement geschaffen, und zum anderen eine kostengünstige Herstellung ermöglicht. Vorzugsweise weisen die Stützelemente in ihren Verlauf wenigstens eine Biegung auf. Durch die Biegung erhält das jeweilige Stützelement insbesondere eine Vorzugswiegerichtung und/oder eine Ausrichtung, insbesondere Einführschräge, die das Einführen der Stützelemente und damit der Befestigungsklammer insgesamt in die Öffnung des Dachhimmels oder des Formhimmels erleichtert.

Weiterhin ist bevorzugt vorgesehen, dass die Rastelemente einendig einstückig mit dem jeweiligen Stützelement ausgebildet sind. Dabei ist somit jedes der Rastelemente einstückig mit dem ihm zugeordneten Stützelement ausgebildet. Sind auch die Stützelemente einstückig mit dem Fußelement ausgebildet, sind die Rastelemente einstückig sowohl mit den Stützelementen als auch mit dem Fußelement ausgebildet. Hierdurch ist eine besonders vorteilhafte und kostengünstige Ausführungsform der Befestigungsklammer geboten.

Erfindungsgemäß sind die Rastelemente anderendig einstückig mit dem Fußelement ausgebildet. Damit sind die Rastelemente an dem dem Fußelement zugewandten Ende einstückig mit dem Fußelement verbunden. In diesem Fall weisen die Rastelemente also kein freies Ende mit einem Halteelement auf, sondern gehen stattdessen in das Fußelement einstückig über. Hierdurch wird die Stabilität und Robustheit der Befestigungsklammer insgesamt erhöht. Insbesondere können dadurch, dass das jeweilige Rastelement einendig einstückig mit dem Stützelement und anderendig einstückig mit dem Fußelement ausgebildet ist, besonders hohe Rastkräfte erzielt werden, die eine dauerhaft sichere Arretierung des Formhimmels an dem Fahrzeugdach gewährleisten.

Besonders bevorzugt ist die Befestigungsklammer als Stanzbiegeteil ausgebildet, wodurch Herstellungskosten und Montageaufwand reduziert werden.

Gemäß einer bevorzugten Weiterbildung der Erfindung liegen die freien Enden der Stützelemente aneinander an und/oder sind aneinander befestigt. Dadurch wird die Robustheit, insbesondere eine Steifigkeit der Befestigungsklammer in vorteilhafter Weise erhöht.

Gemäß einer bevorzugten Weiterbildung der Erfindung weist eines der freien Enden der Stützelemente, also an dem von dem Fußelement abgewandten Ende, eine Biegelasche auf, die das freie Ende des anderen der Stützelemente umgreift. Dadurch ist eine formschlüssige Verbindung der freien Enden der Stützelemente aneinander gewährleistet, wodurch die Befestigungsklammer robust ausgebildet ist und eine hohe Lebensdauer garantiert. Durch die Biegelasche kann darüber hinaus auf ein stoffschlüssiges Verbinden, wie beispielsweise ein Verschweißen oder Verlöten der freien Enden miteinander verzichtet werden.

Das erfindungsgemäße Befestigungssystem mit den Merkmalen des Anspruchs 9 zeichnet sich durch die erfindungsgemäße Ausbildung der Befestigungsklammer aus. Es ergeben sich hierdurch die bereits genannten Vorteile.

Insbesondere ist die Befestigungsklammer mit ihren Führungsschienen in einer Schienenführung des Lagerelements verschiebbar angeordnet oder anordenbar. Das Lagerelement bildet somit zusammen mit dem Fußelement eine Schiebeführung für die Befestigungsklammer, durch welche Montage- oder Herstellungstoleranzen von Formhimmel und/oder Fahrzeugdach in zumindest eine Schieberichtung in vorteilhafter Art und Weise ausgeglichen werden können.

Weiterhin ist bevorzugt vorgesehen, dass die Schieberichtung der Befestigungsklammer im Lagerelement quer zu einer Schieberichtung der Halteelemente beziehungsweise der Rastaufnahmen an dem Fahrzeugdach oder dem Formhimmel ausgerichtet ist. Da sich die Seitenränder beziehungsweise Führungsschienen den Fußelements insbesondere quer zu der Längserstreckung der Rastaufnahmen erstrecken, ergibt sich somit eine vorteilhafte Ausgleichsmöglichkeit des Befestigungssystems in einer X-Y-Ebene. In Z-Richtung beziehungsweise in der Höhe wird bevorzugt ein vorteilhafter Toleranzausgleich durch die elastische Verformbarkeit der Rastelemente und insbesondere auch der Stützelemente erzielt.

Die erfindungsgemäße Dachanordnung mit den Merkmalen des Anspruchs 12 zeichnet sich durch die erfindungsgemäße Ausbildung des Befestigungssystems aus. Es ergeben sich dabei die bereits genannten Vorteile. Insbesondere ist das Lagerelement an dem Fahrzeugdach oder an dem Formhimmel befestigt, beispielsweise verklebt, verschweißt, verklemmt oder formschlüssig gehalten, und die Befestigungsklammer mit den Rastaufnahmen an dem Fahrzeugdach oder dem Formhimmel auf die oben beschriebene Art und Weise. Es ergibt sich dadurch der bereits genannte vorteilhafte Toleranzausgleich bei minimalen Herstellungskosten und einer hohen Robustheit des Gesamtsystems.

Weitere Vorteile und bevorzugte Merkmale und Merkmalskombinationen ergeben sich insbesondere aus dem zuvor Beschriebenen sowie aus den Ansprüchen. Im Folgenden soll die Erfindung anhand der Zeichnung näher erläutert werden. Dazu zeigen
- Figur 1: eine vorteilhafte Dachanordnung in einer vereinfachten Schnittdarstellung,
- Figur 2: ein vorteilhaftes Befestigungssystem der Dachanordnung gemäß einem ersten, nicht erfindungsgmäßen Ausführungsbeispiel in einer perspektivischen Darstellung,
- Figur 3: die Dachanordnung mit dem Befestigungssystem in einer vorteilhaften perspektivischen Darstellung,
- Figur 4: die Dachanordnung mit dem Befestigungssystem in einer vorteilhaften Seitenansicht,
- Figur 5: eine Befestigungsklammer des Befestigungssystems gemäß einem zweiten, erfindungsgemäßen Ausführungsbeispiel in einer perspektivischen Darstellung,
- Figur 6: die Dachanordnung mit der Befestigungsklammer gemäß dem zweiten Ausführungsbeispiel in einer vereinfachten Seitenansicht.

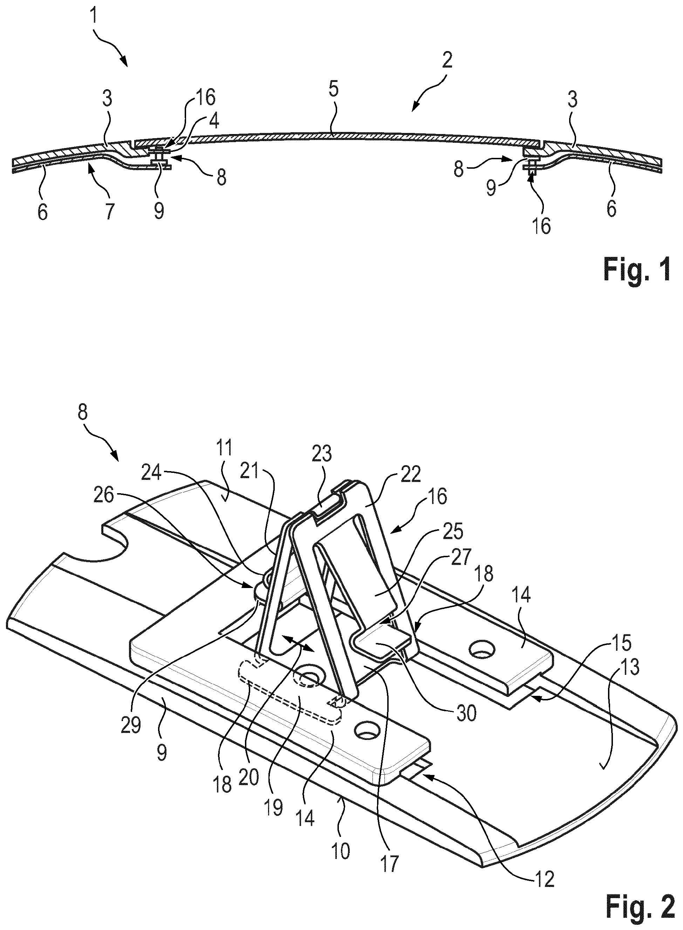

**Figur** 1 zeigt in einer vereinfachten Längsschnittdarstellung eine vorteilhafte Dachanordnung 1 für ein hier nicht näher dargestelltes Kraftfahrzeug. Die Dachanordnung 1 weist ein Fahrzeugdach 2 auf, das einen Dachrahmen 3 mit einer daran ausgebildeten und insbesondere in Quererstreckung gesehen mittig angeordneten Dachöffnung 4 aufweist. Die Dachöffnung 4 ist durch ein Glasdachelement 5 zur Ausbildung eines Panorama-Glasdachs überdeckt beziehungsweise ausgefüllt. Dazu liegt das Glasdachelement 5 an seinem Außenrand bevorzugt auf dem Dachrahmen 3 auf.

Weiterhin weist die Dachanordnung 1 einen Formhimmel 6 auf, der an einer dem Innenraum des Kraftfahrzeugs zugewandten Unterseite 7 des Fahrzeugdachs 2 angeordnet ist. Der Formhimmel 6 dient insbesondere dazu, die üblicherweise aus Metall gefertigten und den Dachrahmen bildenden Karosserieteile abzudecken, sowie einen Geräuschschutz oder eine Geräuschdämmung sowie ein Wärmedämmung für im Innenraum befindliche Personen des Kraftfahrzeugs zu schaffen. Dazu liegt der Formhimmel 6 im Wesentlichen flächig an der Unterseite 7 des Fahrzeugdachs 2 an und erstreckt sich bis zu dem Glasdachelement 5. Zur Befestigung des Formhimmels 6 an dem Fahrzeugdach 2 ist ein Befestigungssystem 8 vorhanden, das eine einfache Montage mit wenigen Arbeitsschritten ermöglicht und dennoch eine hohe Lebensdauer sowie eine feste Verbindung von Formhimmel und Fahrzeugdach miteinander gewährleistet.

**Figur** 2 zeigt in einer perspektivischen Darstellung ein vorteilhaftes Ausführungsbeispiel des Befestigungssystems 8. Dieses weist ein Lagerelement 9 auf, das im Wesentlichen plattenförmig ausgebildet ist und mit einer Unterseite 10 auf dem Formhimmel oder dem Fahrzeugdach ablegbar und daran beispielsweise durch Verschrauben, Verkleben, Verlöten, Verstemmen, Verrasten oder dergleichen befestigbar ist. Das Lagerelement 9 weist auf seiner von der Unterseite 10 abgewandten Oberseite 11 eine Einschubaufnahme 12 auf. Dazu weist das Lagerelement 9 auf der Oberseite 11 eine ebene Auflagefläche 13 auf, die bereichsweise an einander gegenüberliegenden Seitenrändern durch sich längserstreckende Stege 14 überdeckt ist, sodass zwischen den Stegen 14 und der Auflagefläche 13 ein Abstand besteht. Das Lagerelement 9 bildet durch die Auflagefläche 13 und die Stegelemente 14 eine Schienenführung 15 aus.

Das Befestigungssystem 8 weist weiterhin eine Befestigungsklammer 16 auf, die an dem Lagerelement 9 mittels der Schienenführung 15 gehalten ist. Die Befestigungsklammer 16 weist dazu ein Fußelement 17 auf, das plattenförmig, also im Wesentlichen eben, ausgebildet ist. Das plattenförmige Fußelement 17 weist zwei einander gegenüberliegende Seitenränder 18 auf, die als Führungsschienen 19 dazu dienen, in der Schienenführung 15 verschiebbar gelagert zu sein. Die Befestigungsklammer 16 ist somit mit dem Fußelement 17 in der Einschubaufnahme 12 längsverschieblich gelagert, wie durch einen Doppelpfeil 20 in Figur 2 gezeigt.

Zwischen den Seitenrändern 18 sind zwei Stützelemente 21, 22 angeordnet. Die Stützelemente 21, 22 stehen ausgehend von dem Fußabschnitt 17 ab und laufen aufeinander zu, sodass die Befestigungsklammer 16 in der Seitenansicht gesehen dreiecksförmig ausgebildet ist. Die von dem Fußelement 17 abgewandten freien Enden der Stützelemente 21, 22 liegen dabei aneinander an. Gemäß dem vorliegenden Ausführungsbeispiel weist das Stützelement 21 an seinem freien Ende außerdem eine Biegelasche 23 auf, die das freie Ende des Stützelements 22 bereichsweise umgreift, wodurch die Stützelemente 21, 22 an ihren freien Enden mechanisch miteinander verbunden sind.

Die Stützelemente 21, 22 sind dabei einstückig mit dem Fußelement 17 ausgebildet. Vorzugsweise ist die gesamte Befestigungsklammer 16 einstückig ausgebildet und insbesondere als Stanzbiegeteil gefertigt.

So weisen die Stützelemente 21, 22 auch eine rahmenartige Struktur beziehungsweise Formgebung auf. Jedes der Stützelemente 21, 22 weist jeweils zwei streifenförmige Stützschenkel auf, die einendig an dem Fußelement 17 angeformt sind und anderendig durch einen Quersteg miteinander verbunden sind, wobei in dem vorliegenden Ausführungsbeispiel der Quersteg des Stützelements 21 die zuvor bereits erwähnte Biegelasche 23 aufweist beziehungsweise mitausbildet.

An dem jeweiligen Stützelement 21, 22 ist jeweils ein Rastelement 24, 25 angeordnet. Die Rastelemente 24, 25 sind gemäß diesem Ausführungsbeispiel in der Art von Biegelaschen oder Rastzungen ausgebildet und einendig an dem jeweiligen Quersteg des Stützelements 21 beziehungsweise 22 einstückig angeformt. Damit liegen die Rastelemente 24, 25 zwischen den Stützschenkeln der Stützelemente 21, 22 und erstrecken sich in Längserstreckung parallel zu diesen von dem jeweils freien Ende der Stützelemente 21, 22 in Richtung des Fußelements 17.

Die Rastelemente weisen an ihren freien, dem Fußelement 17 zugewandten Endabschnitt jeweils eine Rastnase 26, 27 auf. Zur Ausbildung der Rastnase 26, 27 weisen die Rastelemente 24, 25 an ihrem freien Ende einen V- oder U-förmigen Verlauf, im Längsschnitt gesehen, auf, sodass jeweils eine Vertiefung in dem jeweiligen Rastelement 24, 25 ausgebildet ist, welche die Rastnase 26, 27 als von der Vertiefung vorstehendes Element bildet.

Die Rastelemente 24, 25 sind dabei derart ausgebildet, dass sie von dem jeweiligen Stützelement 21, 22 nach außen beziehungsweise seitlich vorstehen. Dabei werden vorliegend die voneinander abgewandten Seiten der Stützelemente 21, 22 als Außenseiten bezeichnet. Von diesen stehen die Rastelemente 24, 25 nunmehr vor, insbesondere derart, dass die sich an die Rastnasen 26, 27 anschließenden Vertiefungen, die Rastaufnahmen ausbilden, vollständig außerhalb der Stützelemente 21, 22 beziehungsweise beabstandet zu den Außenflächen der Stützelemente 21, 22 liegen.

Durch die einstückige Ausbildung ist gewährleistet, dass die Rastelemente 24, 25 unter elastischer Verformung aufeinander zu bewegbar sind. Wird die Befestigungsklammer 16 in eine beispielsweise rechteckförmige Öffnung des Formhimmels 6 oder des Fahrzeugdachs 2 eingeschoben, deren lichte Weite schmaler ist als der Abstand der Rastaufnahmen zueinander, so federn die Rastelemente 24, 25 beim Einführen in die Öffnung ein beziehungsweise aufeinander zu, bis der Rand der Öffnung in den Rastaufnahmen zum Liegen kommt.

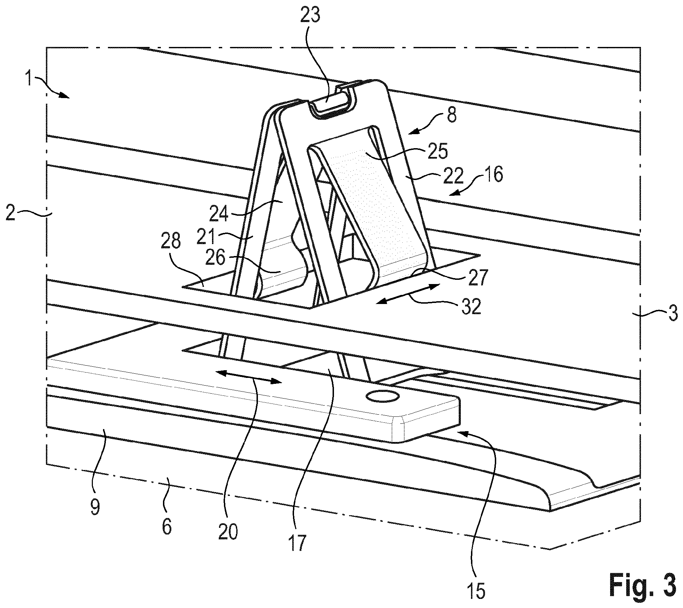

**Figur** 3 zeigt hierzu in einer perspektivischen Detailansicht einen Montagezustand des Befestigungssystems 8 an der Dachanordnung 1. Gemäß dem vorliegenden Ausführungsbeispiel ist dabei das Lagerelement 9 mit der Unterseite 10 auf den Formhimmel 6 aufgelegt und an diesem befestigt. In die Schienenführung 15 ist die Befestigungsklammer 16 mit dem Fußelement 17 eingeschoben und längsverschieblich gelagert. Weiterhin ist die Befestigungsklammer 16 mit den Stützelementen 21, 22 in eine rechteckförmige Öffnung 28 des Fahrzeugdachs 2 insbesondere im Bereich des Rahmens 3 eingeschoben, wobei die lichte Weite der Öffnung 28 kleiner ist als die Breite der Befestigungsklammer 16 im Bereich der Rastaufnahmen in Schieberichtung der Schienenführung 15 gesehen. Durch die elastische Verformung der Rastelemente 24, 25 gelangt das Fahrzeugdach 2 in den Bereich der Rastaufnahmen, sodass die Rastelemente 24, 25 wieder bereichsweise nach außen durch ihre Eigenelastizität verlagert werden, sodass das Fahrzeugdach 2 in den Rastaufnahmen formschlüssig gehalten ist, wobei durch die Vorspannung der Rastelemente 24, 25 eine sichere Verbindung dauerhaft gewährleistet ist. Dabei ist die Höhe der Rastaufnahmen nur geringfügig höher als die Höhe des Fahrzeugdachs 2 in dem Befestigungsbereich, sodass der Randbereich der Öffnung 28 sicher in der jeweiligen Rastaufnahme aufnehmbar ist, wie in Figur 3 gezeigt.

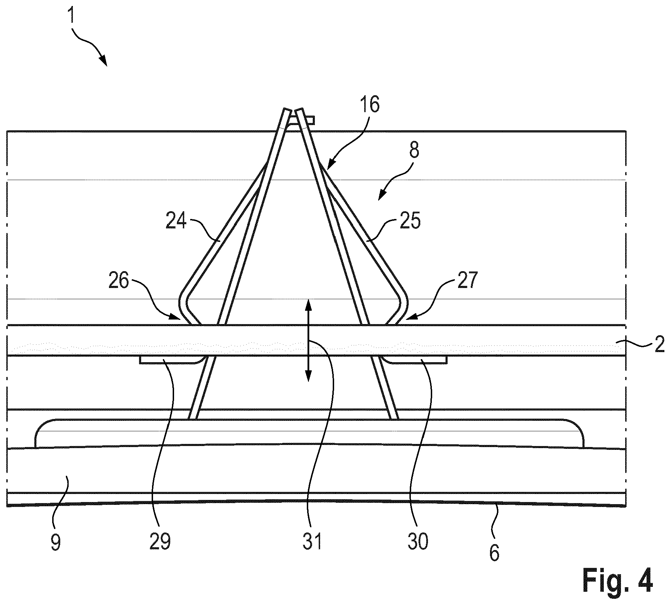

**Figur 4** zeigt eine vereinfachte Seitenansicht der Dachanordnung 1 im Bereich des Befestigungssystems 8 beziehungsweise der Befestigungsklammer 16. Hierbei ist zu erkennen, dass die freien Enden der Rastelemente Halteelemente 29, 30 ausbilden, welche das Fahrzeugdach 2 hintergreifen.

Durch die elastisch verformbare Ausbildung der Rastelemente 24, 25 erlaubt die Befestigungsklammer 16 auch einen Toleranzausgleich in Z- beziehungsweise Höhenrichtung, wie durch einen Doppelpfeil 31 in **Figur 4** gezeigt. Dadurch, dass die Öffnung 28 breiter ausgebildet ist als die Befestigungsklammer 16 beziehungsweise die Stützelemente 21, 22, ist die Befestigungsklammer 16 in der Öffnung 28 längsverschieblich gelagert, wie durch einen Doppelpfeil 32 in **Figur 3** gezeigt. Die Verlagerung oder Verschiebbarkeit gemäß Pfeil 33 liegt dabei quer zu der Verlagerung gemäß Pfeil 20, die durch die Schienenführung 15 und das Fußelement 17 gebildet wird.

Damit ergibt sich, dass durch die vorteilhafte Befestigungsklammer 16 sowohl ein Toleranzausgleich in der Höhe als auch in einer Ebene senkrecht zur Höhe gewährleistet ist. Darüber hinaus bietet das vorteilhafte Befestigungssystem 8 eine einfache Montage.

Während das in **Figur 3** **und** **4** gezeigte Ausführungsbeispiel eine Anordnung des Befestigungssystems 8 derart betrifft, bei welcher das Lagerelement 9 auf dem Formhimmel 6 aufliegt und eine Öffnung 28 des Fahrzeugdachs 3 durchgreift, wie in **Figur 1** auf der linken Seite gezeigt, ist gemäß einem weiteren Ausführungsbeispiel vorgesehen, wie in Figur 1 auf der rechten Seite gezeigt, dass das Lagerelement an dem Fahrzeugdach 3 und die Öffnung 28 in dem Formhimmel 6 ausgebildet ist.

Während gemäß dem Ausführungsbeispiel die Befestigungsklammer 16 an einem separaten Lagerelement 9 einem Formhimmel 6 oder dem Fahrzeugdach 2 befestigbar ist, ist gemäß einem weiteren Ausführungsbeispiel vorgesehen, dass die Einschubaufnahme 12 beziehungsweise die Schienenführung 15 direkt in oder an dem Formhimmel 6 beziehungsweise an dem Fahrzeugdach 2 angeordnet beziehungsweise ausgebildet ist, sodass die Befestigungsklammer 16 direkt an dem Fahrzeugdach 2 oder dem Formhimmel 6 befestigbar beziehungsweise befestigt ist.

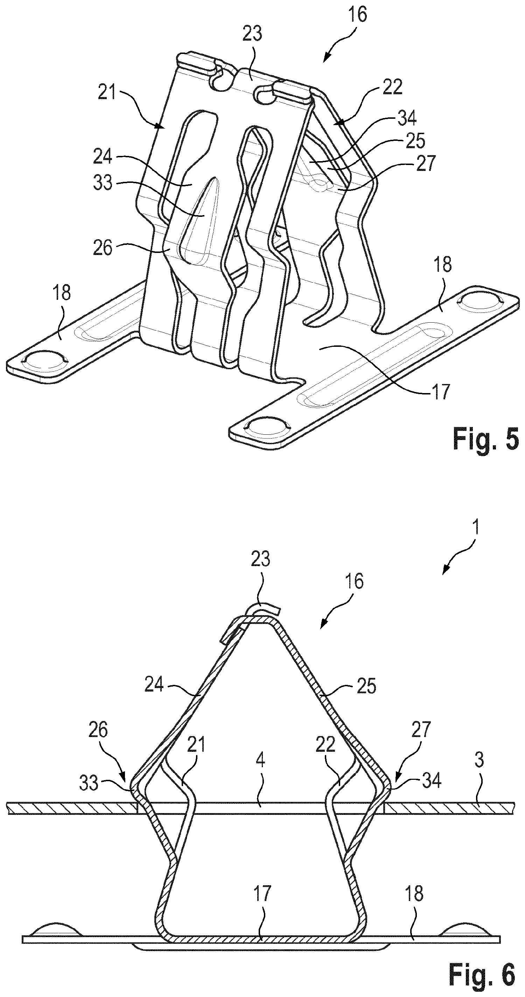

**Figuren 5 und** 6 betreffen ein zweites Ausführungsbeispiel der Befestigungsklammer 16. Im Unterschied zu dem vorhergehenden Ausführungsbeispiel ist das jeweilige Rastelement 24, 25 sowohl einendig einstückig mit dem jeweiligen Stützelement 21, 22 als auch anderendig einstückig mit dem Fußelement 17 verbunden. **Figur** 5 zeigt hierzu die Befestigungsklammer 16 in einer perspektivischen Darstellung. Die Rastelemente 24, 25 weisen somit im Unterschied zu dem vorhergehenden Ausführungsbeispiel kein freies Ende oder keinen freien Endabschnitt auf. Die Rastnasen 26, 27 sind im Wesentlichen wie im vorhergehenden Ausführungsbeispiel durch eine Biegung oder Verformung des jeweiligen Rastelements 24, 25 in seiner Längserstreckung ausgebildet. Wobei sich zwischen der jeweiligen Rastnase 26, 27 und dem Fußelement 17 eine Vertiefung beziehungsweise Rastaufnahme in dem jeweiligen Rastelement 24, 25 ausbildet. Diese Vertiefung endet dann nicht in dem parallel und beabstandet zu dem Fußelement erstreckenden Halteelement 30, sondern geht einstückig in das Fußelement 17 über. Das jeweilige Rastelement 24, 25 erhält somit insbesondere einen zickzackförmigen Längsverlauf.

Auch die Form der Stützelemente, in der Seitenansicht gesehen, unterscheidet sich von dem vorhergehenden Ausführungsbeispiel. Dabei ist vorliegend vorgesehen, dass die Stützelemente 21, 22 eine zusätzliche Biegung aufweisen, sodass sie einen s-förmigen Verlauf erhalten. Dabei sind die Biegestellen versetzt zu den Biegestellen der zugeordneten Rastelemente 24, 25 in Bezug auf die Höhe der Befestigungsklammer 16 angeordnet, sodass sich die Stützelemente 21, 22 und die Rastelemente 24, 25 an unterschiedlichen Stellen bei der Montage elastisch verbogen werden. Dadurch, dass auch die Stützelemente im Längsverlauf eine s-Form aufweisen, ist trotz der einstückigen Ausbildung der Rastelemente 24, 25 an beiden Enden mit den Stützelementen 21, 22 einerseits und dem Fußelement 17 andererseits eine vorteilhafte kraftreduzierte Montage möglich.

Die Rastelemente 24, 25 weisen außerdem jeweils ein Versteifungselement 33, 34 auf, durch welches die Elastizität der Rastelemente 24, 25 in dem Bereich zwischen Rastnase 26, 27 und dem oberen Querschnitt des jeweiligen Stützelements 21, 22 reduziert wird. Das jeweilige Versteifungselement 33, 34 ist dabei wannenförmig als Ausformung ausgebildet, die sich von dem jeweiligen Rastelement 24, 25 nach außen vorwölbt. Insoweit sind die Versteifungselemente 33, 34 als Auswölbungen der Rastelemente 24, 25 im Abschnitt zwischen den Rastnasen 26, 27 und dem dem Stützelement zugeordneten Ende ausgebildet.

Insbesondere erstrecken sich die Versteifungselemente 33, 34 bis an die jeweilige Rastnase 26, 27 derart heran, dass sie die Rastnase 26, 27 abschnittsweise mit ausbilden und dadurch einen seitlichen Vorsprung ausformen, der über die eigentliche Rastnase 26, 27 hinausgeht, wie in insbesondere in Figur 6 gezeigt. **Figur** 6 zeigt eine Schnittdarstellung durch die Dachanordnung 1 mit der Befestigungsklammer 16 gemäß dem Ausführungsbeispiel von **Figur 5****,** wobei die Schnittebene in der Mitte der Befestigungsklammer 16 liegt, sodass sie durch die Rastelemente 24, 25 mittig durchführt.

Dadurch, dass die Versteifungselemente 33, 34 im Bereich der Rastnasen 26, 27 seitlich vorstehen, bilden sie außerdem einen Rückhaltevorsprung aus, der das Fahrzeugdach 2 oder den Formhimmel 6 weiter als die eigentliche Rastnase 26, 27 hintergreift und insbesondere eine weniger steil zu der Ebene des Formhimmels oder des Fahrzeugdachs 2 ausgerichtete Steigung aufweist, wodurch ein Herausziehen der Befestigungsklammer 16 aus der Dachöffnung 4 erschwert ist. Hierdurch sind eine einfache Montage und eine erschwerte Demontage beziehungsweise eine erhöhte Sicherheit vor einem ungewollten Lösen der Befestigungsklammer 16 gewährleistet.

### Bezugszeichenliste

- 1: Dachanordnung
- 2: Fahrzeugdach
- 3: Dachrahmen
- 4: Dachöffnung
- 5: Glasdachelement
- 6: Formhimmel
- 7: Unterseite
- 8: Befestigungssystem
- 9: Lagerelement
- 10: Unterseite
- 11: Oberseite
- 12: Einschubaufnahme
- 13: Auflagefläche
- 14: Steg
- 15: Schienenführung
- 16: Befestigungsklammer
- 17: Fußelement
- 18: Seitenrand
- 19: Führungsschiene
- 20: Doppelpfeil
- 21: Stützelement
- 22: Stützelement
- 23: Biegelasche
- 24: Rastelement
- 25: Rastelement
- 26: Rastaufnahme
- 27: Rastaufnahme
- 28: Öffnung
- 29: Halteelement
- 30: Halteelement
- 31: Doppelpfeil
- 32: Doppelpfeil
- 33: Versteifungselement
- 34: Versteifungselement

## Patentansprüche

1. Befestigungsklammer (16) zur Befestigung eines Formhimmels (6) an einem Fahrzeugdach (2), insbesondere Panorama- oder Schiebedach, mit einem Fußelement (17), das plattenförmig ausgebildet ist, mit zwei sich einander gegenüberliegend angeordneten und von dem Fußelement (17) weg und zumindest im Wesentlichen aufeinander zu erstreckenden Stützelementen (21,22), wobei an jedem Stützelement (21,22) ein von dem Stützelement (21,22) vorstehendes Rastelement (24,25) zur Verrastung der Befestigungsklammer (16) an dem Formhimmel (6) oder an dem Fahrzeugdach (2) angeordnet ist, das an einem von dem Fußelement (17) abgewandten Ende des jeweiligen Stützelements (21,22) elastisch verlagerbar gehalten ist und sich in Richtung des Fußelements (17) erstreckt, wobei das jeweilige Rastelement (24,25) beabstandet zu dem Fußelement (17) eine Rastnase (26,27) zum Hintergreifen eines Randabschnitts des Formhimmels (6) oder des Fahrzeugdachs (2) aufweist, und dass die jeweilige Rastnase (26,27) von der von dem gegenüberliegenden Stützelement (22,21) abgewandten Außenseite des Stützelements (21,22) vorsteht **dadurch gekennzeichnet, dass** die Rastelemente (24,25) anderendig einstückig mit dem Fußelement (17) ausgebildet sind.

2. Befestigungsklammer nach Anspruch 1, **dadurch gekennzeichnet, dass** das Fußelement (17) zwei parallel zueinander angeordnete Führungsschienen (19) aufweist, die sich jeweils von einem Stützelement (21,22) zu dem gegenüberliegenden Stützelement (22,21) erstrecken und von dem Stützelement (21,22) seitlich für eine Schienenführung (15) vorstehen.

3. Befestigungsklammer nach einem der vorhergehenden Ansprüche, **dadurch gekennzeichnet, dass** die Stützelemente (21,22) und die Rastelemente (24,25) jeweils streifenförmig ausgebildet sind.

4. Befestigungsklammer nach einem der vorhergehenden Ansprüche, **dadurch gekennzeichnet, dass** die Stützelemente (21,22) einstückig mit dem Fußelement (17) ausgebildet sind und bevorzugt in ihrem Verlauf wenigstens eine Biegung aufweisen.

5. Befestigungsklammer nach einem der vorhergehenden Ansprüche, **dadurch gekennzeichnet, dass** die Rastelemente (24,25) einendig einstückig mit dem jeweiligen Stützelement (21,22) ausgebildet sind.

6. Befestigungsklammer nach einem der vorhergehenden Ansprüche, **dadurch gekennzeichnet, dass** die Befestigungsklammer (16) als Stanzbiegeteil ausgebildet ist.

7. Befestigungsklammer nach einem der vorhergehenden Ansprüche, **dadurch gekennzeichnet, dass** die freien Enden der Stützelementen (21,22) aneinander anliegend und/oder aneinander befestigt sind.

8. Befestigungsklammer nach einem der vorhergehenden Ansprüche, **dadurch gekennzeichnet, dass** eines der freien Enden der Stützelemente (21,22) eine Biegelasche (23) aufweist, die das freie Ende des anderen der Stützelemente (22,21) umgreift.

9. Befestigungssystem (8) zum Befestigen eines Formhimmels (6) an einem Fahrzeugdach (2), insbesondere Panorama- oder Schiebedach, mit einem an dem Formhimmel (6) oder dem Fahrzeugdach (2) befestigbaren Lagerelement (9), das eine Aufnahme (12) zur formschlüssigen Arretierung einer Befestigungsklammer (16) aufweist, und mit einer Befestigungsklammer (16), die formschlüssig an dem Lagerelement (9) gehalten oder haltbar ist, **gekennzeichnet durch** die Ausbildung der Befestigungsklammer (16) gemäß einem der Ansprüche 1 bis 8.

10. Befestigungssystem nach Anspruch 9, **dadurch gekennzeichnet, dass** die Befestigungsklammer (16) mit ihren Seitenrändern (18) in einer Einschubaufnahme (12) des Lagerelements (9) verschiebbar angeordnet oder anordenbar ist.

11. Befestigungssystem nach einem der Ansprüche 9-10, **dadurch gekennzeichnet, dass** die Schieberichtung der Befestigungsklammer (16) an dem Lagerelement (9) quer zu einer Schieberichtung der Rastelemente (24,25) an dem Fahrzeugdach (2) oder dem Formhimmel (6) ausgerichtet ist.

12. Dachanordnung (1) für ein Fahrzeug, insbesondere Kraftfahrzeug, mit einem Fahrzeugdach (2), insbesondere Panoramadach oder Schiebedach, das einen Dachrahmen (3), in welchem eine Dachöffnung (4) ausgebildet ist, und ein Glasdachelement (5) aufweist, das sich über die Dachöffnung (4) erstreckt, und mit einem Formhimmel (6), der an einer einem Fahrzeuginnenraum zugeordneten Unterseite (7) des Fahrzeugdachs (2) durch ein Befestigungssystem (8) befestigt ist, **gekennzeichnet durch** die Ausbildung des Befestigungssystems (8) gemäß einem der Ansprüche 9 bis 11.

## Claims

1. Fastening clip (16) for fastening a molded headliner (6) to a vehicle roof (2), in particular a panoramic or sliding roof, comprising a planar base element (17), with two support elements (21, 22) arranged opposite one another and extending away from the base element (17) and at least substantially toward one another, wherein on each support element (21, 22) a latching element (24, 25) is arranged which protrudes from the support element (21, 22) in order to latch the fastening clip (16) onto the molded headliner (6) or onto the vehicle roof (2), which latching element is resiliently displaceably held at an end of the corresponding support element (21, 22) remote from the base element (17) and extends in the direction of the base element (17), wherein the corresponding latching element (24, 25), at a distance from the base element (17), comprises a latching lug (26, 27) for engaging behind an edge portion of the molded headliner (6) or the vehicle roof (2), and that the corresponding latching lug (26, 27) protrudes from the outer side of the support element (21, 22) that faces away from the opposite support element (22, 21), **characterized in that** the latching elements (24, 25) are formed integrally with the base element (17) at the other end.

2. Fastening clip according to claim 1, **characterized in that** the base element (17) comprises two guide rails (19) arranged parallel to one another, each extending from one support element (21, 22) to the opposite support element (22, 21) and protruding laterally from the support element (21, 22) for a rail guide (15).

3. Fastening clip according to any of the preceding claims,
**characterized in that** the support elements (21, 22) and the latching elements (24, 25) are each strip-shaped.

4. Fastening clip according to any of the preceding claims,
**characterized in that** the support elements (21, 22) are formed integrally with the base element (17) and preferably have at least one bend in their course.

5. Fastening clip according to any of the preceding claims,
**characterized in that** the latching elements (24, 25) are formed integrally with the corresponding support element (21, 22) at one end.

6. Fastening clip according to any of the preceding claims,
**characterized in that** the fastening clip (16) is formed as a stamped-bent part.

7. Fastening clip according to any of the preceding claims,
**characterized in that** the free ends of the support elements (21, 22) are adjacent to one another and/or fastened to one another.

8. Fastening clip according to any of the preceding claims,
**characterized in that** one of the free ends of the support elements (21, 22) comprises a bending tab (23) which grips around the free end of the other one of the support elements (22, 21).

9. Fastening system (8) for fastening a molded headliner (6) to a vehicle roof (2), in particular a panoramic or sliding roof, comprising a bearing element (9) which can be fastened to the molded headliner (6) or the vehicle roof (2) and has a receptacle (12) for the form-fitting locking of a fastening clip (16), and comprising a fastening clip (16) which is or can be held on the bearing element (9) in a form-fitting manner,
**characterized by** the design of the fastening clip (16) according to any of claims 1 to 8.

10. Fastening system according to claim 9, **characterized in that** the fastening clip (16) with its side edges (18) is or can be arranged displaceably in a slide-in receptacle (12) of the bearing element (9).

11. Fastening system according to any of claims 9-10, **characterized in that** the sliding direction of the fastening clip (16) on the bearing element (9) is oriented transversely to a sliding direction of the latching elements (24, 25) on the vehicle roof (2) or the molded headliner (6).

12. Roof assembly (1) for a vehicle, in particular a motor vehicle, comprising a vehicle roof (2), in particular a panoramic roof or sliding roof, having a roof frame (3) in which a roof opening (4) is formed, and a glass roof element (5) which extends over the roof opening (4), and comprising a molded headliner (6) which is fastened by means of a fastening system (8) to an underside (7) of the vehicle roof (2) associated with a vehicle interior, **characterized by** the design of the fastening system (8) according to any of claims 9 to 11.

## Revendications

1. Pince de fixation (16) pour la fixation d'un ciel préformé (6) sur un toit de véhicule (2), en particulier un toit panoramique ou coulissant, comportant un élément pied (17) qui est réalisé en forme de plaque, comportant deux éléments d'appui (21, 22) agencés l'un en face de l'autre et s'étendant en s'éloignant de l'élément pied (17) et au moins sensiblement l'un vers l'autre, dans laquelle un élément d'encliquetage (24, 25) faisant saillie de l'élément d'appui (21, 22) est agencé sur chaque élément d'appui (21, 22) pour l'encliquetage de la pince de fixation (16) sur le ciel préformé (6) ou sur le toit du véhicule (2), qui est maintenu de manière à pouvoir être déplacé élastiquement à une extrémité de l'élément d'appui (21, 22) respectif opposée à l'élément pied (17) et qui s'étend en direction de l'élément pied (17), dans laquelle l'élément d'encliquetage (24, 25) respectif présente, à distance de l'élément pied (17), un ergot d'encliquetage (26, 27) destiné à venir en prise par l'arrière avec une section de bord du ciel préformé (6) ou du toit de véhicule (2), et en ce que l'ergot d'encliquetage (26, 27) respectif fait saillie du côté extérieur de l'élément d'appui (21, 22) opposé à l'élément d'appui (22, 21), **caractérisée en ce que** les éléments d'encliquetage (24, 25) sont réalisés à l'autre extrémité d'une seule pièce avec l'élément pied (17).

2. Pince de fixation selon la revendication 1, **caractérisée en ce que** l'élément pied (17) présente deux rails de guidage (19) agencés parallèlement l'un à l'autre, qui s'étendent respectivement d'un élément d'appui (21, 22) à l'élément d'appui (22, 21) opposé et font saillie latéralement de l'élément d'appui (21, 22) pour un guidage par rail (15).

3. Pince de fixation selon l'une des revendications précédentes, **caractérisée en ce que** les éléments d'appui (21, 22) et les éléments d'encliquetage (24, 25) sont réalisés respectivement en forme de bande.

4. Pince de fixation selon l'une des revendications précédentes, **caractérisée en ce que** les éléments d'appui (21, 22) sont réalisés d'une seule pièce avec l'élément pied (17) et présentent de préférence au moins une courbure dans leur étendue.

5. Pince de fixation selon l'une des revendications précédentes, **caractérisée en ce que** les éléments d'encliquetage (24, 25) sont réalisés à une extrémité d'une seule pièce avec l'élément d'appui (21, 22) respectif.

6. Pince de fixation selon l'une des revendications précédentes, **caractérisée en ce que** la pince de fixation (16) est réalisée sous forme d'une pièce pliée estampée.

7. Pince de fixation selon l'une des revendications précédentes, **caractérisée en ce que** les extrémités libres des éléments d'appui (21, 22) sont adjacentes et/ou fixées l'une à l'autre.

8. Pince de fixation selon l'une des revendications précédentes, **caractérisée en ce que** l'une des extrémités libres des éléments d'appui (21, 22) présente une patte de pliage (23) qui enserre l'extrémité libre de l'autre des éléments d'appui (22, 21).

9. Système de fixation (8) pour la fixation d'un ciel préformé (6) sur un toit de véhicule (2), en particulier un toit panoramique ou coulissant, comportant un élément de palier (9) pouvant être fixé sur le ciel préformé (6) ou le toit de véhicule (2), qui présente un logement (12) pour l'arrêt par complémentarité de forme d'une pince de fixation (16), et comportant une pince de fixation (16) qui est maintenue ou peut être maintenue par complémentarité de forme sur l'élément de palier (9), **caractérisé par** la réalisation de la pince de fixation (16) selon l'une des revendications 1 à 8.

10. Système de fixation selon la revendication 9, **caractérisé en ce que** la pince de fixation (16) est agencée ou peut être agencée avec ses bords latéraux (18) de manière à pouvoir être déplacée dans un logement d'insertion (12) de l'élément de palier (9).

11. Système de fixation selon l'une des revendications 9 à 10,
**caractérisé en ce que** la direction de coulissement de la pince de fixation (16) sur l'élément de palier (9) est orientée transversalement à une direction de coulissement des éléments d'encliquetage (24, 25) sur le toit de véhicule (2) ou sur le ciel préformé (6).

12. Agencement de toit (1) pour un véhicule, en particulier un véhicule automobile, comportant un toit de véhicule (2), en particulier un toit panoramique ou un toit coulissant, qui présente un cadre de toit (3), dans lequel est formée une ouverture de toit (4), et un élément de toit en verre (5) qui s'étend au-dessus de l'ouverture de toit (4), et comportant un ciel préformé (6) qui est fixé à une face inférieure (7) du toit de véhicule (2) associée à un habitacle de véhicule par un système de fixation (8), **caractérisé par** la réalisation du système de fixation (8) selon l'une des revendications 9 à 11.
